# EUROPEAN PATENT SPECIFICATION

(11) **EP 1 163 037 B1**
(45) Date of publication and mention of the grant of the patent: **30.07.2003**
(21) Application number: 00915179.6
(22) Date of filing: 13.03.2000
(51) Int. Cl.: B01D 33/03, B07B 1/46

(54) **SCREEN ASSEMBLY, VIBRATORY SEPARATOR AND METHOD OF SCREENING**
SIEBKONSTRUKTION, VIBRATIONSTRENNVORRICHTUNG UND VERFAHREN ZUM SIEBEN
ENSEMBLE TAMIS, SEPARATEUR VIBRANT ET PROCEDE DE CRIBLAGE

(30) Priority: 22.04.1999 US 296975
(43) Date of publication of application: 19.12.2001
(60) Divisional application: 01204099.4
(73) Proprietor: Varco I/P, Inc., Houston, TX 77051 (US)
(72) Inventor: ADAMS, Thomas Cole, Hockley, TX 77447 (US); SEYFFERT, Kenneth, Wayne, Houston, TX 77018 (US); LARGENT, David Wayne, Cleveland, TX 77327 (US); SCHULTE, David, Lee, Broussard, LA 70518 (US); MCCLUNG, Guy, Lamont, III, Spring, TX 77379-7023 (US); WALKER, Jeffrey, Earl, Lafayette, LA 70501 (US); MURRAY, Hector, M., Willis, TX 77378 (US); MARONEY, James, Francis, III, Houston, TX 77079 (US); WINKLER, Joseph, Charles, Houston, TX 77024 (US)
(74) Representative: Lucas, Brian Ronald
(86) International application number: PCT/EP00/02216
(87) International publication number: WO 00/064558

(56) References cited:
- WO-A-94/23849
- WO-A-96/33792
- WO-A-97/28906
- DE-C- 4 310 129
- GB-A- 698 515
- RU-C- 2 002 006
- US-A- 1 344 747
- US-A- 1 462 804
- US-A- 5 211 291
- US-A- 5 598 930
- US-A- 5 720 881
- US-A- 5 868 929

## Description

The present invention relates to a screen assembly, a vibratory separator and a method of screening.

When drilling a wellbore in the earth's surface, drilling fluid is used to maintain the tip of a drill cool and to carry solids to the surface of the wellbore. Once at the surface the solids are removed from the drilling fluid which can then be re-used.

Types of apparatus that can remove solids from drilling fluid include a vibratory separator known as shale shaker. A typical shale shaker is disclosed in WO-A-96/33792. Typically, it is known to provide such equipment with one or more screens of wire mesh for filtering the drilling fluid. Typically, the wire mesh is very fine and does not have a high durability. It is advantageous to have a screen which has high durability.

Shale shakers are limited in size, especially those used on offshore platforms where space is at a premium. Accordingly, it is advantageous to filter a large quantity of particle laden mud using standard size shale shakers.

It is also advantageous for screens to be easily replaceable and repairable.

It is also advantageous to increase the residence period of the particle laden fluid on the screen.

According to the present invention, there is provided a screen assembly for a vibratory separator, the screen assembly comprising at least a first and second ridge-valley series of screening material comprising a plurality of alternating ridges and valleys of screening material, each ridge having a ridge end, characterised in that at least the ridge ends of adjacent sides of the first and second ridge-valley series of screening material are offset or overlap when viewed from one end.

Preferably, the screen assembly further comprises a hook strip connection on spaced-apart sides of the at least first and second ridge-valley series of screening material.

Advantageously, the first ridge-valley series of screening material has ridges different in height from the ridges in the second ridge-valley series of screening material.

Preferably, the first ridge-valley series of screening material has at least one of the ridges of a different width to at least one of the ridges of the second ridge-valley series of screening material.

Advantageously, the first ridge-valley series of screening material has ridges different in width from at least one of the valleys of the second series ridge-valley series of screening material.

Preferably, each the ridge end has an opening below the ridge covered with screen or mesh.

Advantageously, each ridge end is covered with screen or mesh material in a generally bulbous shape.

Preferably, each ridge end is closed off to fluid flow.

Advantageously, the at least one of the first and second ridge-valley series of screening material has ridges of differing height, with the height higher at two-spaced apart sides of the screen assembly and the height lower in a middle between spaced-apart sides of the screening material.

Preferably, the at least one of the first and second ridge-valley series of screening material wherein the ridges are of differing height with the height lower at two-spaced apart sides of the screen assembly and the height higher in a middle between spaced-apart sides of the screening material.

Advantageously, the first ridge-valley series of screening material is at an angle to the second series as viewed from above.

Preferably, a third ridge-valley series of screening material and the second ridge-valley series at an angle to the third series as viewed from above.

Advantageously, the screen assembly further comprises a flat screen of screening material, the at least first and second ridge-valley series on the flat screen.

Preferably, the flat screen is made of coarse mesh and the at least first and second ridge-valley series are made of fine mesh.

Advantageously, one of the first and second ridge-valley series has larger ridges than the ridges of an adjacent ridge-valley series.

The first aspect of the present invention also provides a vibratory separator comprising a screen assembly of the present invention.

The first aspect of the invention further provides a method for screening using the vibratory separator of the present invention, the method comprising the step of vibrating the at least two ridge-valley series of screening material, pouring a particle laden fluid on to one of the at least two ridge-valley series of screening material thereon, allowing fluid and predetermined size particles therethrough, and vibrating particles larger than the predetermined size to a far end of one other of the at least two ridge-valley series of screening material.

The first aspect of the invention further provides a method for screening comprising the step of vibrating a screen assembly of the present invention.

For a better understanding of the present invention, reference will now be made, by way of example, to the accompanying drawings, in which:
Figure 1A is a perspective view of a screen apparatus according to the present invention;
Figure 1B is an enlarged view of part of the screen apparatus of Figure 1A;
Figure 1C is an end view taken from line 1C-1C of Figure 1A;
Figure 1D is an end view of a second embodiment of a second screen, similar to the screen of Figure 1A;
Figure 1E is a perspective view of a third screen;
Figure 2A is a perspective view of a screen apparatus according to the present invention; Figure 2B is an enlarged view of part of the screen apparatus of Figure 2A; Figure 2C is a view along line 2C-2C of Figure 2A;
Figures 2D to 2H show a selection of end shapes for ridge end covering according to the present invention;
Figure 3A is a top view of a screen apparatus according to the present invention; Figure 3B is an end view of the screen apparatus of Figure 3A; and
Figure 4 is a perspective view of a screen according to the present invention;
Figure 5A is a top view of a screen according to the present invention; and Figure 5B is an end view of the screen of Figure 5A.

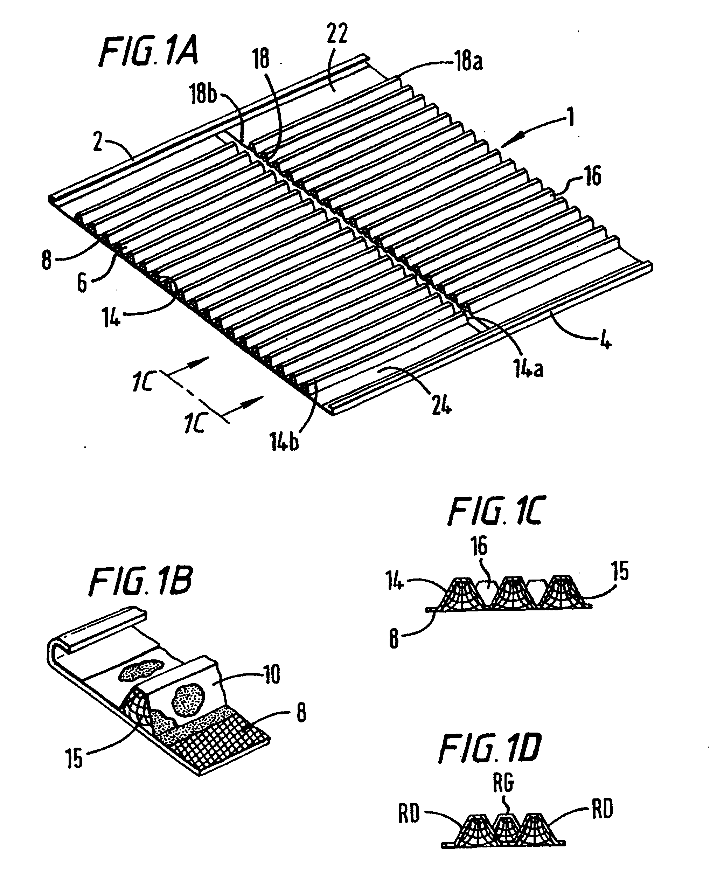

Figure 1A - 1C show a screen assembly generally identified by reference numeral 1 for use in, for example, a vibratory shaker such as a shale shaker. The screen assembly 1 has hook strips 2 and 4 on either side thereof. Screening material 6 is connected along the length of each hook strip by known methods, for example folding, welding, crimping together, epoxying, press/fiction fit, and/or interlocking of parts. In one aspect no underlying plate, straps, or strips and no frame are used with the screen assembly 1.

The screening material 6 may be any known screening material, screen and/or mesh or combination thereof and/or any screening material disclosed herein. In the screen 1 as shown, the screening material 6 includes a lower mesh (for example 1 to 80 mesh) 8 which may be a relatively coarse mesh and an upper mesh 10 (for example 8 to 400 mesh) and which may be a relatively fine mesh. Two fine mesh screens and one coarse mesh screen may also be used. The fine mesh may be bonded to the coarse mesh, sewed to the coarse mesh, glued to it, welded to it, and/or sintered to it.

An optional perforated plate or a series of straps or strips such as those disclosed in WO-A-94/23849, may be used below the coarse mesh. One, two, three or more layers of wire mesh may be used instead of or with such a plate, straps, or strips. In one particular aspect a flat coarse mesh (for example mesh 1 to mesh 12) is used instead of or in addition to a plate, straps, or strips.

Mesh (fine, coarse, or both) is folded over open exposed ends of ridges 14 and 18. This mesh can be substantially flat over the open ridge end or, as shown, it can protrude as part of a bulb or closed curve shape 15. Such shape can provide more screen area for separation and can deflect and re-route solids and fluid to a subsequent set of valleys. Alternatively any or all openings may be plugged with a solid, porous, or perforated plug glued or welded in place. Alternatively, instead of folding screening material and/or mesh over the ends of ridges, a separate piece of screen, screens, mesh, and/or meshes can be placed at an open ridge end and the edges of the piece attached to, connected to, interlocked with, interwoven with, and/or adhered to the edges of the ridge end opening. Also, it is within the scope of this invention for any ridge end to be closed off to fluid flow, to be covered with screen(s) and/or mesh, and/or to be plugged. It is within the scope of this invention for all ridge ends on one side of a series of ridges (for example on side 18a or 14a) to be closed off to flow while the other side's ridge ends (for example on side 18b or 14b) are covered with material which permits flow [for example perforated plug, screen(s), mesh(es)]. These possibilities for end closure and end openings may be used with any screen assembly disclosed herein. It is also within the scope of this invention for all ridge ends of all ridge sets to be open.

A series of valleys or troughs 16 is interspersed between the series of ridges 14. A second series of ridges 18 and valleys 20 is offset from the ridges 14/valleys 16, as shown in Figures 1A to 1D. Alternatively, as shown in Figure 1D the shape of one set of ridges RD can overlap (when viewed on end) the ridges RG of the other set of ridges. The ridges RD are also the same size as the ridges RG, as are the valleys. It is within the scope of this invention to employ any desired amount of such overlap. As shown, for example in Figures 1C and 1D, the ridges are of substantially the same height and ridge ends are of substantially the same cross-sectional area. It is also within the scope of this invention for the ridges of one set of ridges to be of a different width than those of the other set; for the one set to be wider or narrower than the second set; for ridges or ridge ends on one set to have a different cross-sectional area than those of another set; and/or to employ three, four, five, six or more series of offset ridges on a single screen. Optional side paths 22 and 24 may be eliminated by having a ridge edge or ridge adjacent a hook strip 2, 4 side or positioned against a frame side (when an optional frame is used) or side member if hook strips are not used.

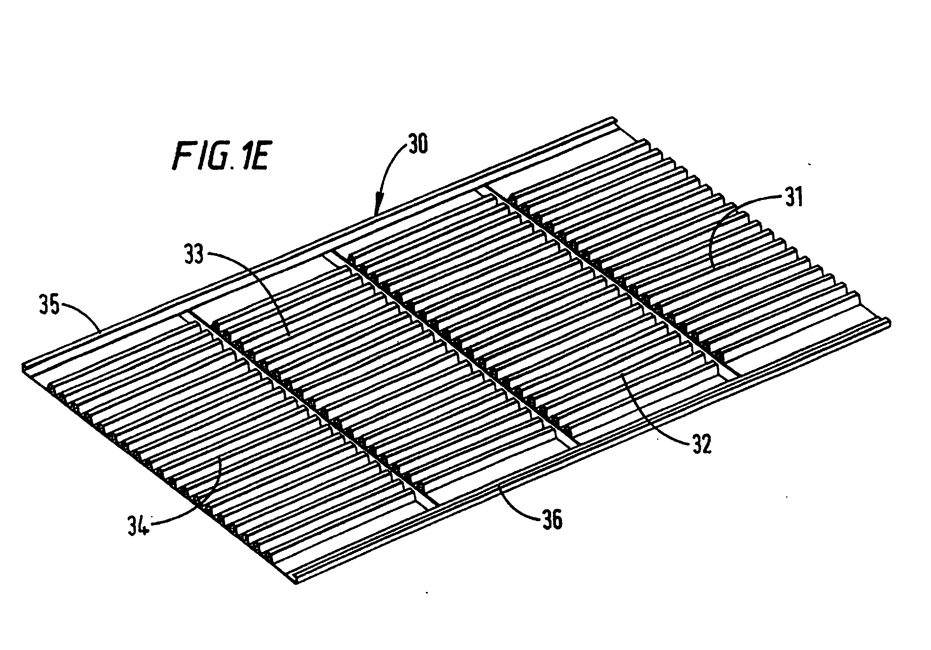

Figure 1E presents a screen apparatus 30 with four sets of offset ridges 31, 32, 33, 34 and hook strip sides 35, 36.

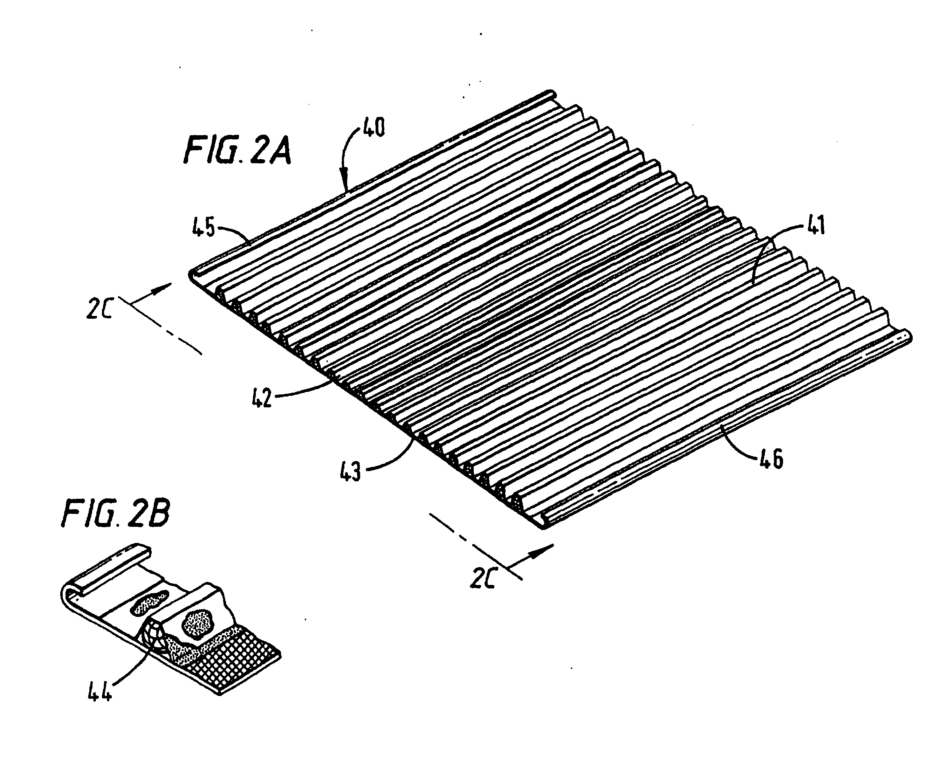

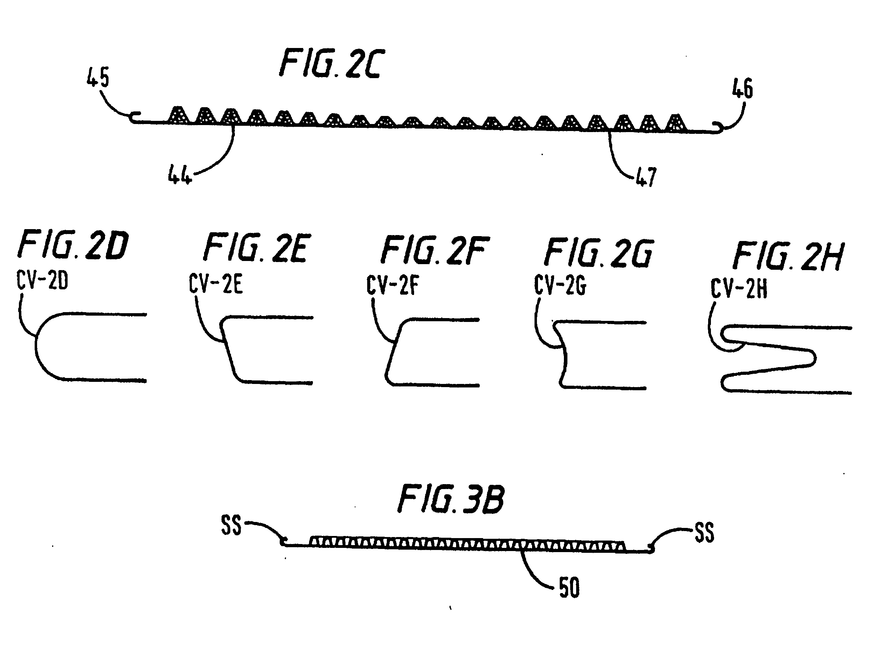

Figures 2A - 2C show a screen apparatus 40 for use in, for example a vibratory shaker such as a shale shaker. The screen apparatus 40 has a series of ridges 41 and valleys 42 of screening material 43 (like any of the screening material 16, Figure 1A). Ends of ridges are, optionally, covered with screen and/or mesh (or, alternatively, plugged as described above with either solid or perforated plugs) in a closed curved shape or bulbous shape 44 or they may be flat. The screening material 43 extends between side hook strips 45, 46 on a flat screen 47. As shown in Figure 2C, ridges of the set of ridges 41 may have different heights; for example alternating high and low, high in the middle and lower on the ends, or as shown in Figure 2C higher towards the sides and lower in the middle. Any such series of ridges with height differences, with width differences, and, therefore, with differing cross-sectional area and different amount of surface area may be used for any ridge series or part thereof on any screen disclosed herein. As shown in Figure 2C, the height (and also the cross-sectional area as viewed on end as in Figure 2C) of the ridges may gradually decrease from the sides of the screen assembly to the middle. Alternatively, the height (and cross-sectional area) may increase from the screen sides to the screen middle.

Figures 2D to 2H show possible shapes for ridge end coverings for the ends 44 (and for any ridge end disclosed herein). The coverings are designated CV-2D, CV-2E, CV-2F, CV-2G and CV-2H for Figures 2D to 2H, respectively.

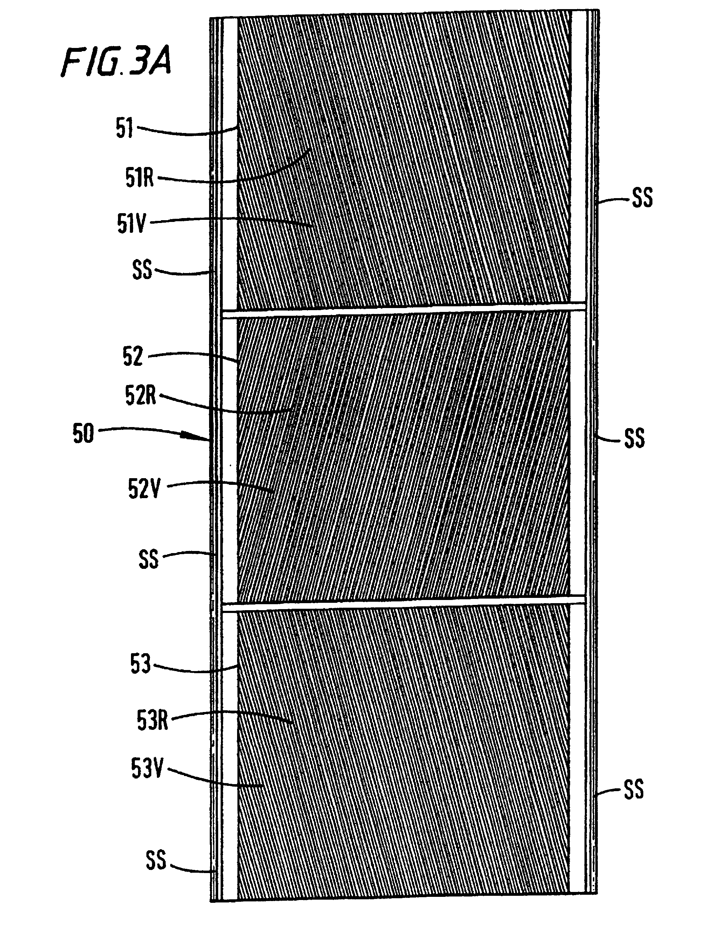

Figure 3A shows a screen apparatus 50 for use in, for example a vibratory shaker or shale shaker. The screen apparatus has three sub-screens 51, 52, 53 in an integral unit. Alternatively, three sub-screens may be connected together, for example with an interlock fit or suitable fasteners. It is within the scope of this invention to employ two, four or more appropriately sized sub-screens in an integral unit or interconnected. Each sub-screen has a series of alternating ridges and valleys 51R, 52R, 53R and 51V, 52V, 53V, respectively. Each ridge-valleys is at an angle to hook strip sides SS of each screen, and the angle of the ridge-valley series of sub-screen 52 is different from that of the sub-screens 51 and 53. As shown in Figure 3B, ridges 53R of the sub-screen 53 are lined up with ridges 52R of the sub-screen 52, but it is within the scope of this invention for ridges of any set to be offset with respect to ridges of another set. For any screen in Figures 1A - 3A the hook strip sides may be eliminated and any known suitable edge or side structure may be employed. Any one of the sub-screens 51, 52, 53 may be eliminated and any two adjacent ridge-valley series in any screen herein may be offset as are the sub-screens in Figure 3A.

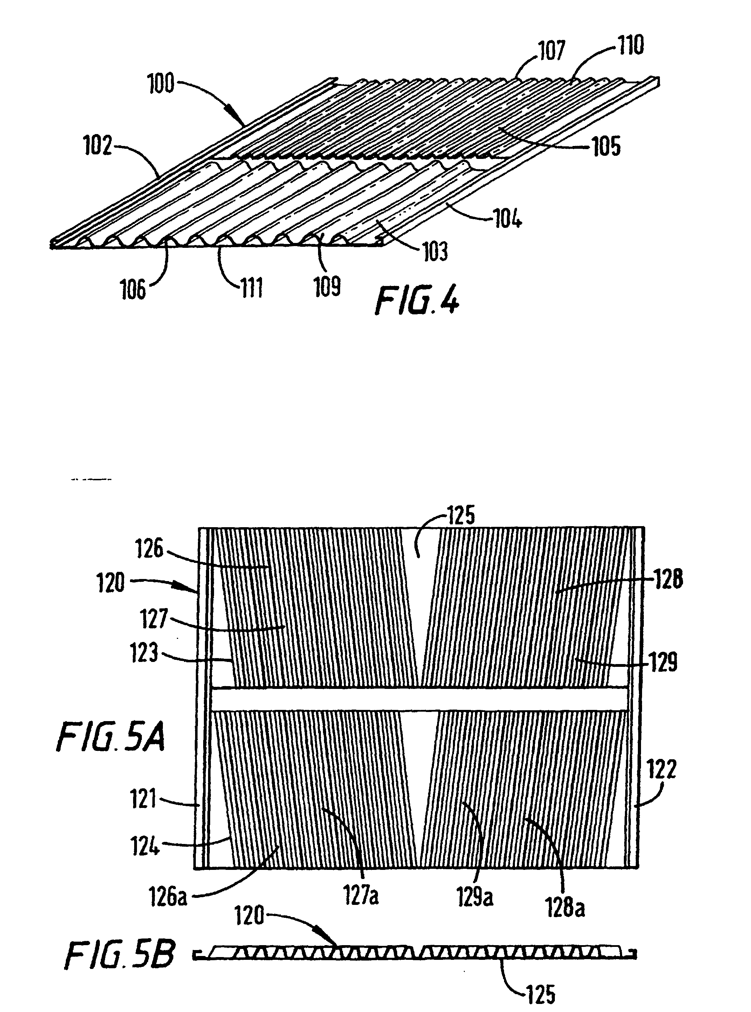

Figure 4 shows a screen assembly 100 according to the present invention with side hook strips 102 and 104 and a two ridge-valley series 103, 105. Ridges 106 of the series 103 are higher than ridges 107 of the series 105. Any suitable spacing between ridges may be employed. The series 103, 105 may be made of any mesh or screen or meshes or screen combination disclosed herein. Any suitable plate, frame, straps or strips may be used with the screen assembly 100; but in one aspect no such item is used. In use, particle laden mud flows from the lower height series 105 to the higher height series 103; but it is within the scope of this invention to flow from a higher height series to a lower height series. As shown screening material 109, 110 [any screen(s) and/or mesh(es) described herein] is connected to (in any way disclosed herein) an optional flat coarse mesh 111.

Figure 5A shows a screen assembly 120 comprising hook strips 121, 122 and two series of ridge-valley screen material 123, 124 which have ridges 126, 126a and valleys 127, 127a arranged on one side angled to direct flow generally toward the centre of the screen assembly, and ridges 128, 128a and valleys 129, 129a arranged on the other side angled to direct flow generally toward the centre (and may converge with ridges 126, 126a and valleys 127, 127a at the centre). The screening material of the series 123, 124 is, optionally, connected to a flat coarse mesh 125. Although optional, any plate, frame, strips, or straps disclosed herein may be used with the assembly 120.

## Claims

1. A screen assembly for a vibratory separator, the screen assembly comprising at least a first and second ridge-valley series of screening material (14, 16; 31, 32, 33, 34; 109, 110; 123, 124) comprising a plurality of alternating ridges (18; 106, 107) and valleys (20) of screening material, each ridge having a ridge end, **characterised in that** at least the ridge ends of adjacent sides of said first and second ridge-valley series of screening material (14; 31; 109; 124) are offset or overlap when viewed from one end.

2. A screen assembly as claimed in Claim 1, further comprising a hook strip (1, 4; 102, 104; 121, 122) connection on spaced-apart sides of said at least first and second ridge-valley series of screening material (14, 16; 31, 32, 33, 34; 109, 110; 123, 124).

3. A screen assembly as claimed in Claim 1 or 2, wherein said first ridge-valley series of screening material (14; 31, 33; 109; 123) has ridges different in height from the ridges in said second ridge-valley series of screening material (16; 31, 34; 110; 124).

4. A screen assembly as claimed in Claim 1, 2 or 3, wherein said first ridge-valley series of screening material (109; 123) has at least one of said ridges of a different width to at least one of the ridges of said second ridge-valley series of screening material (110; 124).

5. A screen assembly as claimed in any preceding claim, wherein said first ridge-valley series of screening material (109; 123) has ridges different in width from at least one of the valleys of said second series ridge-valley series of screening material (110; 124).

6. A screen assembly as claimed in any preceding claim, wherein each said ridge end has an opening below said ridge covered with screen or mesh material (15; 44; CV-2D; CV-2E; CV-2F; CV-2G; CV-2H).

7. A screen assembly as claimed in Claim 6, wherein each ridge end is covered with screen or mesh material (14; 44) in a generally bulbous shape.

8. A screen assembly as claimed in any preceding claim, wherein each ridge end is closed off to fluid flow.

9. A screen assembly as claimed in any preceding claim, wherein at least one of said first and second ridge-valley series of screening material (14, 16; 109; 110) has ridges of differing height, with said height higher at two-spaced apart sides of said screen assembly and said height lower in a middle between spaced-apart sides of said screening material.

10. A screen assembly as claimed in any of Claims 1 to 8, wherein at least one of said first and second ridge-valley series of screening material wherein said ridges are of differing height with said height lower at two-spaced apart sides of said screen assembly and said height higher in a middle between spaced-apart sides of said screening material.

11. A screen assembly as claimed in any preceding claim, wherein said first ridge-valley series of screening material is at an angle to said second series as viewed from above.

12. A screen assembly as claimed in Claim 11 further comprising a third ridge-valley series of screening material and said second ridge-valley series at an angle to said third series as viewed from above.

13. A screen assembly as claimed in any preceding claim, further comprising a flat screen of screening material, said at least first and second ridge-valley series on said flat screen.

14. A screen assembly as claimed in claim 13 wherein said flat screen is made of coarse mesh and said at least first and second ridge-valley series are made of fine mesh.

15. A screen assembly as claimed in any preceding Claim, wherein one of said first and second ridge-valley series has larger ridges than the ridges of an adjacent ridge-valley series.

16. A vibratory separator comprising a screen assembly as claimed in any preceding claim.

17. A method for screening using the vibratory separator as claimed in Claim 16, said method comprising the step of vibrating said at least two ridge-valley series of screening material, pouring a particle laden fluid on to one of said at least two ridge-valley series of screening material thereon, allowing fluid and predetermined size particles therethrough, and vibrating particles larger than said predetermined size to a far end of one other of said at least two ridge-valley series of screening material.

18. A method for screening comprising the step of vibrating a screen assembly as claimed in any of Claims 1 to 15.

## Patentansprüche

1. Siebbaueinheit für eine Vibrationstrennvorrichtung, wobei die Siebbaueinheit wenigstens eine erste und eine zweite Reihe aus Stegen und Tälern aus Siebmaterial (14, 16; 31, 32, 33, 34; 109, 110; 123, 124) umfaßt, die mehrere abwechselnde Stege (18; 106, 107) und Täler (20) aus Siebmaterial umfassen, wobei jeder Steg ein Stegende besitzt, **dadurch gekennzeichnet, daß** zumindest die Stegenden benachbarter Seiten der ersten und der zweiten Reihe aus Stegen und Tälern aus Siebmaterial (14; 31; 109; 124) bei Betrachtung von einem Ende versetzt sind oder überlappen.

2. Siebbaueinheit nach Anspruch 1, die ferner auf beabstandeten Seiten wenigstens der ersten und der zweiten Reihe aus Stegen und Tälern aus Siebmaterial (14, 16; 31, 32, 33, 34; 109, 110; 123, 124) eine Haken-Streifen-Verbindung (1, 4; 102, 104; 121, 122) umfaßt.

3. Siebbaueinheit nach Anspruch 1 oder 2, bei der die erste Reihe aus Stegen und Tälern aus Siebmaterial (14; 31, 33; 109; 123) Stege besitzt, deren Höhe von jener der Stege in der zweiten Reihe aus Stegen und Tälern aus Siebmaterial (16; 31, 34; 110; 124) verschieden ist.

4. Siebbaueinheit nach Anspruch 1, 2 oder 3, bei der die erste Reihe aus Stegen und Tälern aus Siebmaterial (109; 123) wenigstens einen Steg mit einer Breite besitzt, die von jener wenigstens eines Stegs der zweiten Reihe aus Stegen und Tälern aus Siebmaterial (110; 124) verschieden ist.

5. Siebbaueinheit nach einem vorhergehenden Anspruch, bei der die erste Reihe aus Stegen und Tälern aus Siebmaterial (109; 123) Stege mit einer Breite besitzt, die von jener wenigstens eines der Täler der zweiten Reihe aus Stegen und Tälern aus Siebmaterial (110; 124) verschieden ist.

6. Siebbaueinheit nach einem vorhergehenden Anspruch, bei der jedes Stegende eine Öffnung unter dem Steg besitzt, die mit dem Sieb- oder Maschenmaterial (15; 44; CV-2D; CV-2E; CV-2F; CV-2G; CV-2H) bedeckt ist.

7. Siebbauemheit nach Anspruch 6, bei der jedes Stegende mit Sieb- oder Maschenmaterial (14; 44), das im allgemeinen wulstförmig ist, bedeckt ist.

8. Siebbaueinheit nach einem vorhergehenden Anspruch, bei der jedes Stegende gegenüber einer Fluidströmung verschlossen ist.

9. Siebbaueinheit nach einem vorhergehenden Anspruch, bei der wenigstens eine der ersten und der zweiten Reihe aus Stegen und Tälern aus Siebmaterial (14, 16; 109; 110) Stege mit unterschiedlicher Höhe besitzt, wobei die Höhe auf zwei beabstandeten Seiten der Siebbaueinheit höher als in der Mitte zwischen den beabstandeten Seiten des Siebmaterials ist.

10. Siebbaueinheit nach einem der Ansprüche 1 bis 8, bei der wenigstens eine der ersten und der zweiten Reihe aus Stegen und Tälern aus Siebmaterial Stege mit unterschiedlicher Höhe besitzt, wobei die Höhe auf zwei beabstandeten Seiten der Siebbaueinheit niedriger als in der Mitte zwischen den beabstandeten Seiten des Siebmaterials ist.

11. Siebbaueinheit nach einem vorhergehenden Anspruch, bei der die erste Reihe aus Stegen und Tälern aus Siebmaterial bei Betrachtung von oben zu der zweiten Reihe einen Winkel bildet.

12. Siebbaueinheit nach Anspruch 11, die ferner eine dritte Reihe aus Stegen und Tälern aus Siebmaterial aufweist, wobei die zweite Reihe aus Stegen und Tälern bei Betrachtung von oben zu der dritten Reihe einen Winkel bildet.

13. Siebbaueinheit nach einem vorhergehenden Anspruch, die ferner ein ebenes Sieb aus Siebmaterial umfaßt, wobei sich wenigstens die erste und die zweite Reihe aus Stegen und Tälern auf dem ebenen Sieb befinden.

14. Siebbaueinheit nach Anspruch 13, bei der das ebene Sieb aus einem groben Maschennetz gebildet ist und die erste und die zweite Reihe aus Stegen und Tälern aus einem feinen Maschennetz gebildet ist.

15. Siebbaueinheit nach einem vorhergehenden Anspruch, bei der eine der ersten und zweiten Reihen aus Stegen und Tälern Stege besitzt, die größer als die Stege einer benachbarten Reihe aus Stegen und Tälern sind.

16. Vibrationstrennvorrichtung, die eine Siebbaueinheit nach einem vorhergehenden Anspruch umfaßt.

17. Verfahren zum Sieben unter Verwendung der Vibrationstrennvorrichtung nach Anspruch 16, wobei das Verfahren die folgenden Schritte umfaßt: Versetzen der wenigstens zwei Reihen aus Stegen und Tälern aus Siebmaterial in Schwingungen, Schütten eines partikelhaltigen Fluids auf eine der wenigstens zwei Reihen aus Stegen und Tälern aus Siebmaterial, Zulassen eines Durchgangs von Fluid und von Partikeln mit vorgegebener Größe und Versetzen von Partikeln, die größer als die vorgegebene Größe sind, in Schwingungen, bis sie ein fernes Ende einer anderen der wenigstens zwei Reihen aus Stegen und Tälern aus Siebmaterial erreichen.

18. Verfahren zum Sieben, das den Schritt des Versetzens in Schwingungen einer Siebbaueinheit nach einem der Ansprüche 1 bis 15 umfaßt.

## Revendications

1. Assemblage de tamis pour un séparateur vibrant, l'assemblage de tamis comprenant au moins une première et une deuxième série de crête-vallée d'un matériau de tamisage (14, 16 ; 31, 32, 33, 34 ; 109, 110 ; 123, 124) comprenant une pluralité alternée de crêtes (18 ; 106, 107) et de vallées (20) d'un matériau de tamisage, chaque crête ayant une extrémité de crête, **caractérisé en ce qu'**au moins les extrémités de crête des côtés adjacents de ladite première et deuxième série de crête-vallée du matériau de tamisage (14 ; 31 ; 109 ; 124) sont décalées ou bien se chevauchent quand on les observe à partir d'une extrémité.

2. Assemblage de tamis selon la revendication 1, comprenant de plus une bande à crochet (1, 4 ; 102, 104 ; 121, 122) reliée sur les côtés espacés et séparés de ladite au moins première et deuxième série de crête-vallée du matériau de tamisage (14, 16 ; 31, 32, 33, 34 ; 109, 110 ; 123, 124).

3. Assemblage de tamis selon la revendication 1 ou 2, dans lequel ladite première série de crête-vallée du matériau de tamisage (14 ; 31, 33 ; 109 ; 123) possède des crêtes différentes en hauteur des crêtes dans ladite deuxième série de crête-vallée du matériau de tamisage (16 ; 31, 34 ; 110 ; 124).

4. Assemblage de tamis selon la revendication 1, 2 ou 3, dans lequel ladite première série de crête-vallée du matériau de tamisage (109 ; 123) possède au moins une desdites crêtes d'une largeur différente d'au moins une des crêtes de ladite deuxième série de crête-vallée du matériau de tamisage (110 ; 124).

5. Assemblage de tamis selon l'une quelconque des revendications précédentes, dans lequel ladite première série de crête-vallée du matériau de tamisage (109 ; 123) possède des crêtes différentes en largeur d'au moins une des vallées de ladite deuxième série de crête-vallée du matériau de tamisage (110 ; 124).

6. Assemblage de tamis selon l'une quelconque des revendications précédentes, dans lequel chacune desdites extrémités de crête possède une ouverture sous ladite crête recouverte d'une matière de tamis ou de treillis (15 ; 44 ; CV-2D ; CV-2E ; CV-2F ; CV-2G ; CV-2H).

7. Assemblage de tamis selon la revendication 6, dans lequel chaque extrémité de crête est recouverte de matière de tamis ou de treillis (14 ; 44) dans une forme généralement bulbeuse.

8. Assemblage de tamis selon l'une quelconque des revendications précédentes, dans lequel chaque extrémité de crête est fermée à un écoulement de fluide.

9. Assemblage de tamis selon l'une quelconque des revendications précédentes, dans lequel au moins une desdites première et deuxième séries de crête-vallée du matériau de tamisage (14, 16 ; 109 ; 110) possède des crêtes de hauteur différente, ladite hauteur étant plus haute au niveau des deux côtés espacés et séparés dudit assemblage de tamisage et ladite hauteur étant plus basse au milieu entre les côtés espacés et séparés dudit matériau de tamisage.

10. Assemblage de tamisage selon l'une quelconque des revendications 1 à 8, dans lequel au moins une desdites première et deuxième séries de crête-vallée du matériau de tamisage, dans lequel lesdites crêtes sont de hauteur différente, ladite hauteur étant plus basse au niveau des deux côtés espacés et séparés dudit assemblage de tamis et ladite hauteur étant plus haute au milieu entre les côtés espacés et séparés dudit matériau de tamisage.

11. Assemblage de tamis selon l'une quelconque des revendications précédentes, dans lequel ladite première série de crête-vallée du matériau de tamisage forme un angle avec ladite deuxième série, tel que vue de dessus.

12. Assemblage de tamis selon la revendication 11, comprenant de plus une troisième série de crête-vallée du matériau de tamisage et ladite deuxième série de crête-vallée forme un angle avec ladite troisième série, tel que vue de dessus.

13. Assemblage de tamisage selon l'une quelconque des revendications précédentes, comprenant de plus un tamis plat d'un matériau de tamisage, lesdites au moins première et deuxième séries de crête-vallée reposant sur ledit tamis plat.

14. Assemblage de tamis selon la revendication 13, dans lequel ledit tamis plat est fait de maille grossière et lesdites au moins première et deuxième séries de crête-vallée sont faites de maille fine.

15. Assemblage de tamis selon l'une quelconque des revendications précédentes, dans lequel une desdites première et deuxième séries de crête-vallée possède des crêtes plus grandes que les crêtes d'une série de crête-vallée adjacente.

16. Séparateur vibrant comprenant un assemblage de tamis selon l'une quelconque des revendications précédentes.

17. Procédé pour tamiser utilisant le séparateur vibrant selon la revendication 16, ledit procédé comprenant l'étape consistant à faire vibrer lesdites au moins deux séries de crête-vallée du matériau de tamisage, verser un fluide chargé de particules sur l'une desdites au moins deux séries de crête-vallée du matériau de tamisage sur celle-ci, laisser traverser le fluide et les particules de taille prédéterminée, et faire vibrer les particules plus grandes que ladite taille prédéterminée à une extrémité distante de l'autre desdites au moins deux séries de crête-vallée du matériau de tamisage.

18. Procédé pour tamiser comprenant l'étape consistant à faire vibrer un assemblage de tamisage selon l'une quelconque des revendications 1 à 15.
